(19) Europäisches Patentamt
European Patent Office
Office européen des brevets

(11) EP 2 348 349 A1

(12) **EUROPÄISCHE PATENTANMELDUNG**

(43) Veröffentlichungstag:
27.07.2011 Patentblatt 2011/30

(51) Int Cl.:
*G02B 13/18* (2006.01)   *G02B 25/00* (2006.01)

(21) Anmeldenummer: 11150929.5

(22) Anmeldetag: 14.01.2011

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **26.01.2010 DE 102010001227**

(71) Anmelder: **Eschenbach Optik GmbH**
**90409 Nürnberg (DE)**

(72) Erfinder:
• **Henkelmann, Klaus**
**90552, Röthenbach (DE)**
• **Gilgert, Wolfgang**
**90491, Nürnberg (DE)**
• **Schillinger, Martin**
**81671, München (DE)**

(74) Vertreter: **Rau, Schneck & Hübner**
**Patentanwälte - Rechtsanwälte**
**Königstraße 2**
**90402 Nürnberg (DE)**

(54) **Lupe**

(57) Eine Lupe hat eine augenseitige asphärische Bi-konvex-Linse (8) und eine objektseitige Meniskuslinse (9), deren konkave Linsenfläche (10) einem Sehfeld (11) zugewandt ist. Es resultiert eine Lupe, deren Komplexität bei gegebener Anwendungsflexibilität gering ist.

Fig. 2

EP 2 348 349 A1

**Beschreibung**

Derartige Lupen sind als Standlupen zum Aufstellen auf ein zu vergrößerndes Objekt, beispielsweise auf eine Zeitung, und als Handlupe bzw. Handlesegerät beispielsweise aus dem Wikipedia-Eintrag zum Stichwort "Lupe" vom 18.11.2009 bekannt.

Es ist eine Aufgabe der vorliegenden Erfindung, eine Lupe derart weiterzubilden, dass deren Komplexität bei gegebener Anwendungsflexibilität gering ist.

Diese Aufgabe ist erfindungsgemäß gelöst durch eine Lupe mit den im Anspruch 1 angegebenen Merkmalen.

Die erfindungsgemäße Lupe kann als Standlupe oder als Handlupe ausgeführt sein. Eine Bauhöhe der Lupe kann geringer sein als 50 mm und kann insbesondere 40 mm betragen, kann sogar geringer sein als 40 mm oder 35 mm und kann sogar nur 32 mm betragen. Mit der erfindungsgemäßen Lupe kann ein großer Abbildungsmaßstab beim Einsatz als Standlupe oder auch eine hohe Vergrößerung beim Einsatz als Handlesegerät realisiert sein. Das optische System der erfindungsgemäßen Lupe mit der Bikonvex-Linse und der Meniskuslinse kann so ausgelegt sein, dass ein bequemer Einblick in die Lupe realisiert ist. Auslegungen sind möglich mit einer Objektlage und/oder einer Bildlage mit geringem Abstand zur Lupe.

Bei einer Lupe nach Anspruch 2 resultiert ein optisches System mit vergleichsweise geringem Herstellungsaufwand.

Eine optische Auslegung nach Anspruch 3 ist an den jeweiligen Anwendungszweck gut angepasst. Der Abbildungsmaßstab ist das Verhältnis zwischen einer Größe des im Auge des Betrachters entstehenden Bildes und der Größe des mit der Lupe zu vergrößernden Gegenstandes. Der Abbildungsmaßstab stellt also das Verhältnis zwischen einer Bildgröße und einer Objektgröße dar.

Eine asphärische Bikonvex-Linse nach Anspruch 4 verbessert die Abbildungseigenschaften der Lupe. Die vorzugsweise mit genau einer asphärischen optischen Fläche ausgeführte Bikonvex-Linse lässt sich mit besonders geringem Aufwand fertigen. Die nicht asphärische optische Fläche der Bikonvex-Linse, also die sphärische Fläche, ist in der Herstellung preiswert.

Variabel vorgebbare Abstände nach den Ansprüchen 5 und 6 ermöglichen den Einsatz der Lupe als Zoom-Lupe. Die Variabilität der Abstände kann auch in Kombination realisiert sein.

Eine lösbare Verbindung der beiden Linsen nach Anspruch 7 vergrößert die Anwendungsflexibilität der Lupe nochmals. Die Verbindung der beiden Linsen kann als Magnet-, kann als Steck- oder kann als Schraubverbindung realisiert sein. Die Verbindung kann so realisiert sein, dass kein Werkzeug zum Lösen der Linsen erforderlich ist. Die lösbare Verbindung kann zur Möglichkeit genutzt werden, die Lupe mit nur jeweils einer der beiden Linsen, also beispielsweise nur mit der Bikonvex-Linse oder nur mit der Meniskuslinse, zu verwenden und die andere der beiden Linsen zu entfernen. Insbesondere die Bikonvex-Linse kann als Handlupe genutzt werden. Alternativ oder zusätzlich ist es möglich, eine der Linsen oder beide Linsen durch eine weitere Linse eines vorgehaltenen Linsensatzes auszutauschen, um auf diese Weise die Abbildungseigenschaften der Lupe in vorgegebener Weise zu modifizieren.

Ausführungsbeispiele der Erfindung werden nachfolgend anhand der Zeichnung näher erläutert. In dieser zeigen:

Fig. 1         perspektivisch eine Zoom-Standlupe zur Auflage auf einer zu vergrößernden Unterlage, beispielsweise auf einer Zeitung;

Fig. 2         in einem Meridionalschnitt ein optisches System für eine Standlupe nach Fig. 1 mit festem Abbildungsmaßstab;

Fig. 3         in einer zu Fig. 2 ähnlichen Darstellung eine weitere Ausführung eines optischen Systems für eine weitere Ausführung der Standlupe mit variablem Abbildungsmaßstab;

Fig. 4         in einer zu Fig. 1 ähnlichen Darstellung eine weitere Ausführung in Form eines Handleseglases; und

Fig. 5 bis 8     verschiedene Ausführungen von Linsensystemen zum Einsatz in einer Lupe, die als Standlupe oder als Handleseglas ausgeführt sein kann.

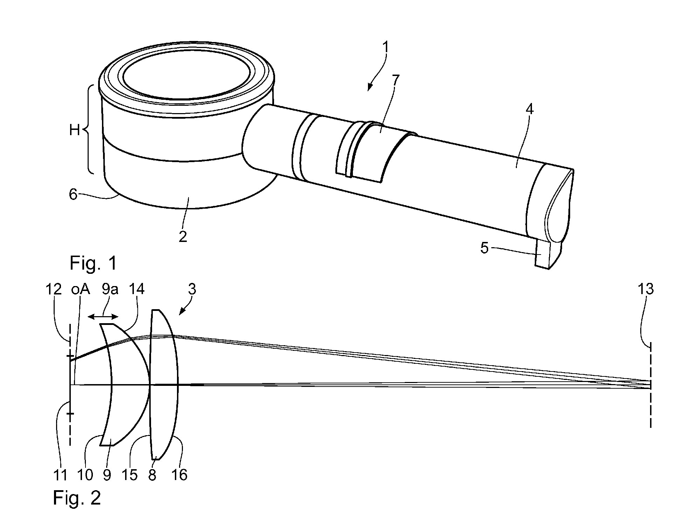

Eine Lupe 1 nach Fig. 1 ist als Zoom-Standlupe zum Aufstellen auf eine zu vergrößernde Unterlage, z. B. auf eine Zeitung, ausgeführt. Die Lupe 1 hat einen Lupenkopf 2, in dem ein optisches System 3 (vgl. Fig. 2) untergebracht ist, welches nachfolgend noch näher beschrieben wird. Die Lupe 1 hat einen Handgriff 4. Am freien Ende des Handgriffs 4 ist ein Stützfuß 5 zum Abstützen des Handgriffs 4 beispielsweise auf der zu vergrößernden Unterlage oder einer sonstigen Auflage ausgeführt. Neben dem Stützfuß 5 dient eine auf der zu vergrößernden Unterlage aufliegende Stützwand 6 zur Auflage der Lupe 1 auf der zu vergrößernden Unterlage.

Der Handgriff 4 hat ein Betätigungselement 7, mit dem beispielsweise eine Beleuchtung für ein Sehfeld der Lupe 1 aktiviert werden kann. Das Betätigungselement 7 kann alternativ oder zusätzlich auch zur Vorgabe eines Zoomfaktors der Lupe 1 dienen.

Das optische System 3 hat eine augenseitige asphärische Bikonvex-Linsenanordnung in Form einer Bikonvex-Linse 8 und eine objektseitige Meniskuslinse 9, deren konkave Linsenfläche 10 dem Sehfeld 11 der Lupe 1 zugewandt ist. Die Lupe 1 mit dem optischen System 3 kann mit einem festen Abbildungsmaßstab von 3,54 betrieben werden. Bei einer Variante der Lupe 1 kann die Meniskuslinse 9, wie in der Fig. 2 durch einen Doppelpfeil 9a dargestellt, in ihrem Abstand zur gegenüber dem Sehfeld 11 ortsfesten Bikonvex-Linse 8 eingestellt werden, so dass sich ein Zoom-Effekt ergibt. Diese Verlagerung kann mittels eines Betätigungsrades am Lupenkopf 2 geschehen.

Die nachfolgende Tabelle 1 gibt Kenndaten des optischen Designs des optischen Systems 3 wieder.

| Oberfläche | Radius | Dicke | optisches Material | Durchmesser | E |
|---|---|---|---|---|---|
| Objektebene | | 17 | | 0 | 0 |
| S 1 | -80 | 16 | PMMA | 52 | 0 |
| S2 | -29.1 | 0.5 | | 52 | 0.025 |
| S3 | 364 | 13.5 | PMMA | 63 | 0 |
| S4 | -57.25 | 200 | | 63 | -0.3329002 |
| Pupillenebene | | -321.81 | | 3 | 0 |

Die Objektebene ist dabei eine Ebene 12, in der das Sehfeld 11 angeordnet ist.

Die erste Spalte "Oberfläche" der Tabelle 1 gibt nach der Objektebene 12 die Reihenfolge der optischen Flächen der beiden Linsen 9 und 8 ausgehend vom Sehfeld 11 wieder. Die erste Oberfläche S 1 ist dabei die konkave Linsenfläche 10 der Meniskuslinse 9. Im Strahlengang des Abbildungslichts zwischen dem Sehfeld 11 und einer augenseitigen Pupillenebene 13 des optischen Systems 3 folgen eine konvexe Linsenfläche 14 der Meniskuslinse 9 als Oberfläche S2 nach Tabelle 1, eine konvexe Linsenfläche 15 der Bikonvex-Linse 8 als Oberfläche S3 nach Tabelle 1 und eine konvexe Linsenfläche 16 der Bikonvex-Linse 8 als Oberfläche S4 nach Tabelle 1. Die Spalte "Radius" der Tabelle 1 gibt einen Haupt-Krümmungsradius oder Scheitelradius R der jeweiligen optischen Oberfläche an. Die Spalte "Dicke" gibt den Abstand eines Scheitelpunkts der jeweiligen optischen Oberfläche zum Scheitelpunkt der jeweils vorhergehenden Oberfläche an. Die Spalte "Material" gibt das Material der beiden Linsen 8, 9 an, im Falle der Ausführung nach Fig. 2 also PMMA (Polymethylmethacrylat). Die Spalte "Durchmesser" gibt den jeweils optisch relevanten Durchmesser der optischen Oberfläche an. Die Spalte "E" gibt den Wert einer konischen Konstante für die jeweilige optische Oberfläche an.

Bei den optischen Oberflächen S 1 bis S4 nach der Tabelle 1 handelt es sich um sphärische oder asphärische Flächen gemäß folgender Asphärenformel:

$$z(y) := \frac{\frac{y^2}{R}}{1 + \sqrt{1 - (1 + E) \cdot \left(\frac{y}{R}\right)^2}} + A4 \cdot y^4 + A6 \cdot y^6 + A8 \cdot y^8 + A10 \cdot y^{10}$$

Hierbei bezeichnen:

z(y)  eine Pfeilhöhe der jeweiligen optischen Fläche im Abstand y zu einer optischen Achse oA;
R  der vorstehend schon erwähnte Krümmungsradius;
E  die vorstehend schon erwähnte konische Konstante;
A4, A6, A8, A10  die jeweilige Asphärizität charakterisierende Koeffizienten.

Im Fall des optischen Systems 3 sind die asphärischen Koeffizienten A4, A6, A8 und A10 jeweils null. Je nach Größe des Sehfeldes 11 und je nach Größe des erforderlichen Abbildungsmaßstabes können die Koeffizienten A4, A6, A8 und A10 auch Werte haben, die von Null abweichen, so dass sich eine entsprechende Asphärizität der optischen Fläche ergibt.

Bei einer weiteren Ausführung des optischen Systems 3 nach Fig. 2 beträgt der Abbildungsmaßstab 2,95. Die nachfolgende Tabelle 2 gibt die optischen Daten des optischen Systems 3 mit diesem weiteren Abbildungsmaßstab wieder.

Tabelle 2

| Oberfläche | Radius | Dicke | optisches Material | Durchmesser | E |
|---|---|---|---|---|---|
| Objektebene | | 17 | | 0 | 0 |
| S1 | -80 | 16 | PMMA | 52 | 0 |
| S2 | -29.1 | 0.5 | | 52 | 0.025 |
| S3 | 364 | 12.0 | PMMA | 63 | 0 |
| S4 | -69.59 | 200 | | 63 | 0.2 |
| Pupillenebene | | -299.79 | | 3 | 0 |

Die Lupe 1 hat exakt zwei optische Komponenten, nämlich die Linsen 8 und 9.

Die Bikonvex-Linse 8 hat bei der Ausführung nach Fig. 2 eine asphärische optische Fläche. Hierbei kann es sich um die Eintritts- oder um die Austrittsfläche der Bikonvex-Linse 8 handeln. Die andere der beiden optischen Flächen der Bikonvex-Linse 8 ist in diesem Fall sphärisch. Bei einer nicht dargestellten Ausführung hat die Bikonvex-Linse 8 zwei asphärische optische Flächen.

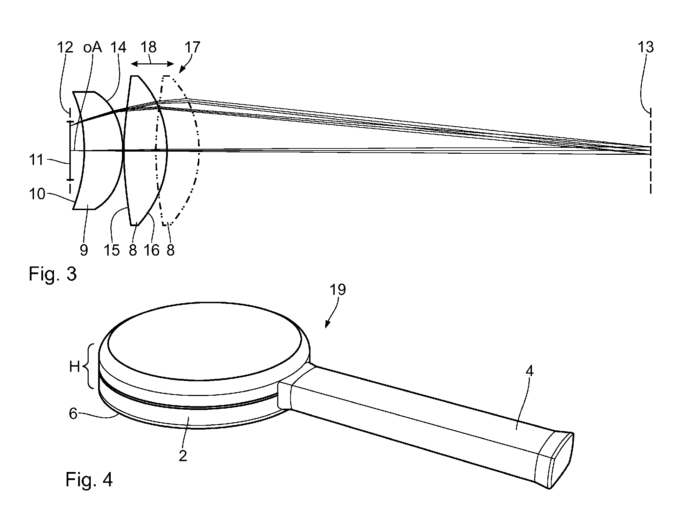

Fig. 3 zeigt eine weitere Ausführung eines optischen Systems 17, das anstelle des optischen Systems 3 bei der Lupe 1 zum Einsatz kommen kann. Komponenten, die denjenigen entsprechen, die vorstehend unter Bezugnahme auf die Fig. 1 und 2 bereits erläutert wurden, tragen die gleichen Bezugsziffern und werden nicht nochmals im Einzelnen diskutiert.

Beim optischen System 17 ist der Abstand zwischen der Bikonvex-Linse 8 und der Meniskuslinse 9 durch eine Verschiebung der Bikonvex-Linse 8 längs der optischen Achse oA variabel vorgebbar. Dies ist in der Fig. 3 durch einen Doppelpfeil 18 und durch eine Darstellung der Bikonvex-Linse 8 in den beiden extremen Lagerungspositionen gezeigt, also in der Verschiebe-Position, in der der Abstand zwischen den Linsen 8, 9 minimal ist, und in der Verschiebe-Position, in der der Abstand zwischen den Linsen 8 und 9 maximal ist. Der Abstand zwischen den beiden Linsen 8 und 9 ist in einem Bereich zwischen 0,5 mm und 14 mm variabel vorgebbar. Es resultiert eine zugehörige Variation des Abbildungsmaßstabes zwischen den Werten 2,2 und 3,4. Die Lupe 1 mit dem optischen System 17 kann also als Zoom-Standlupe genutzt werden.

Die nachfolgende Tabelle 3 gibt Kenndaten des optischen Designs des optischen Systems 17 wieder.

Tabelle 3

| Oberfläche | Radius | Dicke | optisches Material | Durchmesser | E |
|---|---|---|---|---|---|
| Objektebene | | 6 | | 0 | 0 |
| S1 | -60 | 15.95 | PMMA | 44 | 0 |
| S2 | -35.23 | 0.5 - 14 | | 48 | 0.95 |
| S3 | 149 | 18 | PMMA | 63 | -16.24 |
| S4 | -43.66 | 200 | | 63 | -0.7414 |
| Pupillenebene | | -259.3 -325.6 | | 3 | 0 |

Beim optischen System 17 hat die Fläche S4, also die Linsenfläche 16 der Bikonvex-Linse 8, den folgenden asphärischen Koeffizienten A6:

$$A6 = 8{,}7159682 \cdot 10^{-11}$$

Im Falle des optischen Systems 17 mit der variablen Vorgebbarkeit des Abstands zwischen den Linsen 8, 9 über die Verschiebung 18 kann diese Verschiebung über einen Drehring am Lupenkopf 2 oder über das Betätigungselement 7 im Handgriff 4 der Lupe 1 herbeigeführt werden. Zur Verschiebung kann insbesondere ein mechanisches Umlenkgetriebe genutzt werden. Prinzipiell ist auch eine motorisch angetriebene Verschiebung, beispielsweise durch einen Servomotor mit nachgeschaltetem Umlenkgetriebe möglich.

Fig. 4 zeigt eine weitere Variante einer Lupe 19 in Form eines Handleseglases. Die Lupe 19 kann frei zwischen einer zu vergrößernden Unterlage und dem Auge positioniert werden, wobei sich eine Änderung einer Vergrößerung bzw. eines Abbildungsmaßstabes durch Ändern eines Objekt- bzw. eines Augenabstandes, also eines Abstandes des optischen Systems 3 bzw. 17 der Lupe 19 einerseits zur Objektebene 12 und andererseits zur Pupillenebene 13 variabel vorgegeben werden.

Die Lupe 19 kann optische Systeme nach Art der optischen Systeme 3 und 17 einsetzen, die vorstehend erläutert wurden. Die Lupe 19 kann ebenfalls als Leuchtlupe ausgeführt sein. Eine Änderung der Vergrößerung kann durch eine Änderung der Form der augenseitigen Linsenfläche 16 der Bikonvex-Linse 8 vorgegeben werden. Dies gilt grundsätzlich für sämtliche beschriebene Ausführungsbeispiele.

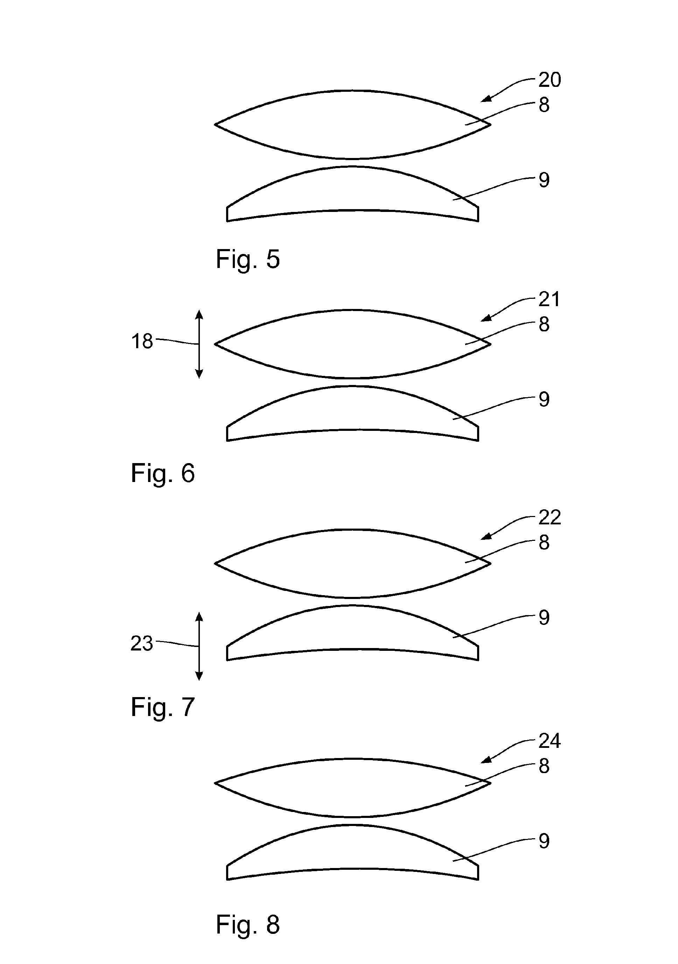

Anhand der Fig. 5 bis 8 werden nachfolgend weitere Auslegungsvarianten von optischen Systemen beschrieben, die anstelle der vorstehend bereits diskutierten optischen Systeme 3, 17 bei den Lupen 1 bzw. 19 zum Einsatz kommen können. Komponenten, die denjenigen entsprechen, die vorstehend unter Bezugnahme auf die Fig. 1 bis 4 bereits erläutert wurden, tragen die gleichen Bezugsziffern und werden nicht nochmals im Einzelnen diskutiert.

Fig. 5 zeigt eine Auslegung eines optischen Systems 20, die grundsätzlich derjenigen des optischen Systems 3 entspricht. Das optische System 20 kann bei einer Standlupe nach Art der Lupe 1 oder bei einem Handlesegerät nach Art der Lupe 19 zum Einsatz kommen. Beim Einsatz in einer Standlupe kann ein vergrößernder Abbildungsmaßstab von 2,4, von 3,0 und von 3,6 beispielsweise realisiert sein. Eine Bauhöhe H (vgl. Fig. 1) kann im Falle des Einsatzes des optischen Systems 20 bei 40 mm liegen.

Die Vergrößerung V eines Handlesegeräts kann definiert sein als

$$V = 250 \text{ mm}/f$$

Hierbei ist f die Brennweite des jeweiligen optischen Systems.

Beim Einsatz des optischen Systems 20 als Handlesegerät kann dieses mit einer Gesamtbrennweite von 10 Dioptrien, von 12 Dioptrien oder von 14 Dioptrien eingesetzt werden. Eingesetzt in die obige Vergrößerungsformel ergibt sich eine entsprechende Vergrößerung V für das Handlesegerät.

Fig. 6 zeigt ein optisches System 21 nach Art des optischen Systems 17. Das optische System 21 kann bei einer Zoom-Standlupe nach Art der Lupe 1 zum Einsatz kommen. Bauhöhen H können bei Einsatz des optischen Systems 21 im Bereich zwischen 38 mm und 50 mm realisiert sein. Entsprechend beträgt ein Gesamtverstellweg zur Verlagerung der Linse 8 (Verschiebepfeil 18) 12 mm. Ein Abbildungsmaßstab kann beim Einsatz des optischen Systems 21 im Bereich zwischen 2,2 und 3,4 variabel vorgebbar sein.

Fig. 7 zeigt eine Auslegung eines optischen Systems 22, die ebenfalls bei einer Zoom-Standlupe beispielsweise anstelle des optischen Systems 21 zum Einsatz kommen kann. Im Unterschied zur Ausgestaltung mit dem optischen System 21 nach Fig. 6 hat die Ausgestaltung einer Lupe 1 mit dem optischen System 22 nach Fig. 7 eine unabhängig von der ZoomEinstellung konstante Bauhöhe H von 60 mm.

Beim optischen System 22 ist über einen Verschiebeweg (Doppelpfeil 23) ein Abstand zwischen der Meniskuslinse 9 und der Objektebene 12 variabel vorgebbar. Der gesamte Verschiebebereich der Verschiebung 23 der Meniskuslinse 9 beträgt 12 mm. Aufgrund der Verschiebung 23 ergibt sich beim optischen System 22 ebenfalls ein variabler Abbildungsmaßstab im Bereich zwischen 2,2 und 3,4.

Die Verschiebbarkeiten 18 und 23 können bei einer nicht dargestellten Ausführungsform eines optischen Systems auch in Kombination realisiert sein. In diesem Fall sind beide Linsen 8, 9 in ihrem Abstand zur Objektebene 12 längs der optischen Achse oA verschiebbar ausgestaltet.

Fig. 8 zeigt ein optisches System 24 zum Einsatz in einem Handleseglas nach Art der Lupe 19. Ein Abstand zwischen den beiden Linsen 8 und 9 ist dabei fest. Eine Änderung der tatsächlichen Bildlage kann über die Positionierung des optischen Systems 24 zwischen der Objektebene 12 und der Pupillenebene 13 variabel vorgegeben werden.

Zum Verändern der optischen Eigenschaften der vorstehend diskutierten optischen Systeme 3, 17, 20 bis 22 sowie 24 können die beiden Linsen 8 und 9 für den Benutzer lösbar miteinander verbunden sein. Dies kann dazu genutzt werden, um anstelle der gesamten optischen Systeme die einzelnen Linsen 8 bzw. 9 bei speziellen Anwendungen einzusetzen. Eine lösbare Verbindung der beiden Linsen 8 und 9 miteinander kann auch dazu genutzt werden, eine der Linsen 8 und 9 durch eine andere Linse 8' bzw. 9' auszutauschen, um auf diese Weise zu einer Lupe mit anderen abbildenden Eigenschaften zu gelangen. Die beiden Linsen 8 und 9 können über eine Magnet-, über eine Steck- oder über eine Schraubverbindung lösbar miteinander verbunden sein. Die lösbare Verbindung ist insbesondere so, dass kein Werkzeug zum Lösen der beiden Linsen 8, 9 voneinander erforderlich ist.

Die Lupen 1 bzw. 19 gewährleisten einen binokularen Einblick. Je nach Auslegung der vorstehend beschriebenen optischen Systeme kann ein gro-βer Augenabstandsbereich und/oder ein großer Objektabstandsbereich gewährleistet sein.

**Patentansprüche**

1.  Lupe (1; 19)

    - mit einer augenseitigen Bikonvex-Linse (8),
    - mit einer objektseitigen Meniskuslinse (9), deren konkave Linsenfläche (10) einem Sehfeld (11) zugewandt ist.

2.  Lupe nach Anspruch 1, **dadurch gekennzeichnet, dass** diese exakt zwei optische Komponenten, nämlich die Bikonvex-Linse (8) und die Meniskuslinse (9), aufweist.

3.  Lupe nach Anspruch 1 oder 2, **gekennzeichnet durch** eine optische Auslegung derart, dass ein vergrößernder Abbildungsmaßstab resultiert, der mindestens 2 beträgt.

4.  Lupe nach einem der Ansprüche 1 bis 3, **dadurch gekennzeichnet, dass** die Bikonvex-Linse (8) als asphärische Linse ausgeführt ist und insbesondere genau eine asphärische optische Fläche aufweist.

5.  Lupe nach einem der Ansprüche 1 bis 4, **dadurch gekennzeichnet, dass** der Abstand zwischen der Bikonvex-Linse (8) und der Meniskuslinse (9) variabel vorgebbar ist.

6.  Lupe nach einem der Ansprüche 1 bis 5, **dadurch gekennzeichnet, dass** der Abstand zwischen der Meniskuslinse (9) und einer Objektebene (12) der Lupe (1; 19), in der das Sehfeld (11) liegt, variabel vorgebbar ist.

7.  Lupe nach einem der Ansprüche 1 bis 6, **dadurch gekennzeichnet, dass** die Bikonvex-Linse (8) und die Meniskuslinse (9) für den Benutzer lösbar miteinander verbunden sind.

Fig. 1

Fig. 2

Fig. 3

Fig. 4

Fig. 5

Fig. 6

Fig. 7

Fig. 8

**Europäisches Patentamt**
**European Patent Office**
**Office européen des brevets**

## EUROPÄISCHER RECHERCHENBERICHT

**Nummer der Anmeldung**

EP 11 15 0929

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | JP 11 211994 A (CANON KK)<br>6. August 1999 (1999-08-06)<br>* das ganze Dokument *<br>----- | 1-6<br><br>7 | INV.<br>G02B13/18<br>G02B25/00 |
| Y | JP 10 206752 A (TOCHIGI NIKON KK; NIPPON KOGAKU KK) 7. August 1998 (1998-08-07)<br>* Zusammenfassung *<br>----- | 7 | |
| A | US 5 239 416 A (SPITZBERG LARRY A [US])<br>24. August 1993 (1993-08-24)<br>* Zusammenfassung; Abbildung 1 *<br>----- | 1 | |

**RECHERCHIERTE SACHGEBIETE (IPC)**

G02B

Der vorliegende Recherchenbericht wurde für alle Patentansprüche erstellt

| Recherchenort | Abschlußdatum der Recherche | Prüfer |
|---|---|---|
| Den Haag | 17. Februar 2011 | Lehtiniemi, Henry |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 15 0929

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2011

| Im Recherchenbericht angeführtes Patentdokument | Datum der Veröffentlichung | Mitglied(er) der Patentfamilie | Datum der Veröffentlichung |
|---|---|---|---|
| JP 11211994 A | 06-08-1999 | KEINE | |
| JP 10206752 A | 07-08-1998 | KEINE | |
| US 5239416 A | 24-08-1993 | KEINE | |

EPO FORM P0461

Für nähere Einzelheiten zu diesem Anhang : siehe Amtsblatt des Europäischen Patentamts, Nr.12/82